(19) Europäisches Patentamt
European Patent Office
Office européen des brevets

(11) **EP 2 014 888 B1**

(12) **EUROPEAN PATENT SPECIFICATION**

(45) Date of publication and mention
of the grant of the patent:
**03.08.2011 Bulletin 2011/31**

(51) Int Cl.:
***F01N 9/00*** *(2006.01)*

(21) Application number: **08009370.1**

(22) Date of filing: **21.05.2008**

(54) **Method of estimation of the pressure drop between two sections of the exhaust line of an internal combustion engine**

Verfahren zur Einschätzung des Druckabfalls zwischen zwei Abschnitten der Abgasleitung eines Verbrennungsmotors

Procédé d'estimation de la chute de pression entre deux sections de la ligne d'échappement d'un moteur à combustion interne

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **12.07.2007 IT RM20070385**

(43) Date of publication of application:
**14.01.2009 Bulletin 2009/03**

(73) Proprietor: **GM Global Technology Operations LLC**
**Detroit, MI 48265-3000 (US)**

(72) Inventors:
• **Dilntino, Maura**
**10126 Torino (IT)**
• **De Fazio, Tommaso**
**10132 Torino (IT)**
• **Rovatti, Giovanni**
**10023 Chieri (TO) (IT)**

(74) Representative: **Kraenzmer, Martin**
**Adam Opel AG**
**Gewerblicher Rechtschutz Patentrecht**
**IPC: A0-02**
**65423 Rüsselsheim (DE)**

(56) References cited:
**EP-A1- 1 081 347     EP-A2- 1 092 847**
**DE-A1- 19 933 988**

## Description

The present invention relates to a method for estimating a pressure drop between two sections of an exhaust line of a diesel engine. It is known that the pressure drop between any two sections of a fluid line is mainly a function of the mass flow rate of the fluid circulating in it. In case of an exhaust line, it is not convenient to measure directly the exhaust mass flow, but in most control strategies for diesel engines flow rates of fresh air and of fuel supplied to the engine are known, so that the exhaust gas mass flow can easily be calculated from these. Accordingly, it is suggested e. g. in EP 1 081 347 B1 to estimate a pressure at a downstream side of a particulate filter using a function $f(W_{DPF}, T_b)$ of exhaust gas flow rate $W_{DPF}$ and exhaust gas temperature $T_b$, wherein $W_{DPF}$ is the sum of fresh air flow rate and fuel flow rate.

The function f is a polynomial, the coefficients of which are identified from experimental data. This method is rather tedious to implement, since a large quantity of experimental data is necessary to fit the polynomial f in the two variables $W_{DPF}$, $T_b$. Further for estimating the pressure $p_b$ downstream of the particulate filter, the temperature $T_b$ at the downstream side of the filter has to be known. So either a sensor must be provided for measuring $T_b$, or a mathematical model must be developed for calculating it.

The object of the present invention is to provide a method for estimating a pressure drop between two sections of an exhaust line of a diesel engine which is easier and quicker to implement than conventional methods.

This object is achieved by a method comprising the steps of

- measuring a fresh air mass flow rate into the engine,
- measuring a fuel mass flow rate into the engine,
- calculating an exhaust gas mass flow rate from said fresh air and fuel mass flow rates, and
- determining an estimated pressure drop as a function of said exhaust gas mass flow rate,

which is characterized in that the exhaust gas mass flow rate is calculated as a weighted sum of said fresh air and fuel flow mass rates, wherein a weighting factor of the fuel flow mass rate is higher than a weighting factor of the fresh air mass flow rate.

It appears that using such a weighting factor, temperature dependency of the pressure drop can be taken account of in a very simple and straightforward fashion.

Experiments have shown that the weighting factor of the fuel mass flow rate should be at least twice that of the fresh air mass flow rate, and that it should preferably be in a range between 5 and 30 times that of the fresh air mass flow rate.

The function yielding the pressure drop preferably is a polynomial in the exhaust gas mass flow rate, and it may have the exhaust gas mass flow rate as its only variable.

If the method is applied to an exhaust line wherein one of said sections comprises a pressure sensor and the other section comprises a second sensor which gives pressure dependent readings, the method preferably further comprises the steps of calculating a pressure in said other section based on a pressure reading from said pressure sensor and the estimated pressure drop, and of compensating a reading from said second sensor based on the calculated pressure. Such a second sensor can e. g. be an oxygen sensor.

Alternatively, one of said sections may be a downstream end of the exhaust line. Since the downstream end is necessarily always at ambient pressure, it is possible to calculate the pressure in any other section of the exhaust line without having to use a pressure sensor.

Further features and advantages of the present invention will become apparent from the subsequent description of embodiments thereof referring to the appended drawings.

Fig. 1     is a schematic diagram of an exhaust system of a diesel engine;

Fig. 2     is a graph of the correlation coefficient between exhaust flow rate and pressure drop; and

Fig. 3     is a graph of measured and estimated pressure drops as a function of the exhaust gas flow rate.

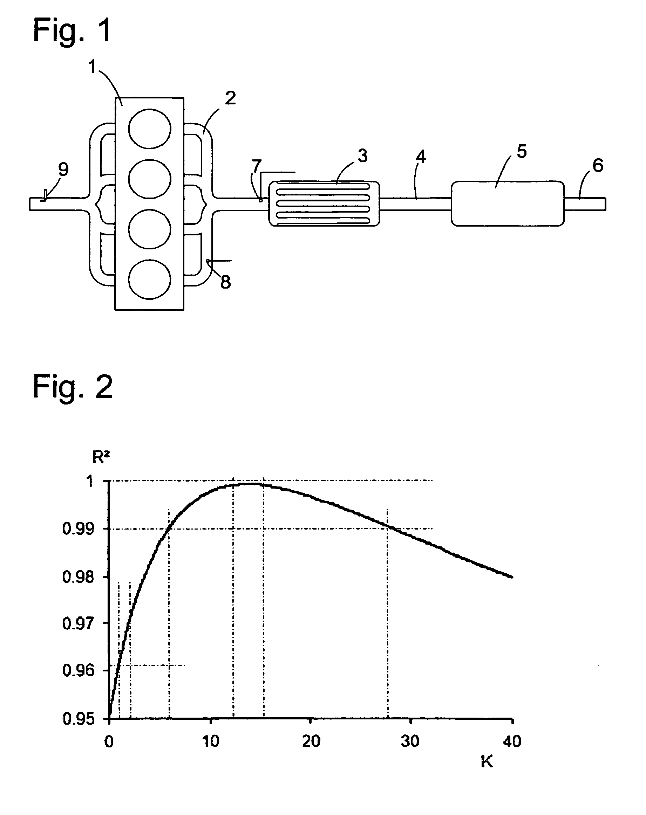

Fig. 1 shows schematically an engine block 1 of a diesel engine having four cylinders, an exhaust manifold 2 for connecting each cylinder of the engine block to a particulate filter 3, a muffler 5, an exhaust duct 4 extending between the particulate filter 3 and the muffler 5, and an outlet section 6. When the engine is operating, and exhaust gas is flowing through the exhaust system of Fig. 1, a pressure drop occurs in any of its components, so that the pressure to which is exposed e. g. an oxygen sensor 7 adjacent to an inlet of particulate filter 3 may be different from a pressure measured by a pressure sensor 8 in a upstream portion of the exhaust manifold 2, and the pressure drop to which is subject the particulate filter 3 is different from the difference between the pressure detected by sensor 8 and the ambient pressure.

In order to estimate a pressure drop between any two points of the exhaust system or between a given point of the exhaust system and the outside environment, the mass flow through the exhaust system must be known. Conventionally, an airflow sensor 9 is provided in the intake manifold of the engine for detecting the fresh air flow into the cylinders, and the fuel supplied to the cylinders is metered and is thus known, too. It can therefore be concluded that the mass flow rate $m_e$ of the exhaust gas expelled from the engine block 1 should be

the sum $\dot{m}_e = \dot{m}_a + \dot{m}_f$ of fresh air flow rate $\dot{m}_a$ and fuel flow rate $\dot{m}_f$. It is found, however, that based on a thus calculated exhaust gas flow rate, a completely reliable prediction of a pressure drop in the exhaust system is not possible. This is not so surprising, because it is known that the pressure drop depends not only on the mass flow rate, but also on the temperature of the flowing gas, and this temperature may vary according to the operating conditions of the engine. Surprisingly, however, it was found that this influence can be taken account of by replacing the above algebraic mass flow by a weighted mass flow M given by

$$\dot{M} = \dot{m}_a + k\,\dot{m}_f ,$$

wherein k is a positive constant.

Fig. 2 is a graph of correlation coefficient $R^2$ obtained between measured and estimated pressure drops in the exhaust system of Fig. 1 as a function of the weighting coefficient k. In this graph, the algebraic mass flow $\dot{m}_e$ corresponds to a weighting coefficient k=1. For this weighting coefficient, a correlation coefficient between measured and estimated pressure drops of slightly better than 0.96 is obtained. With a weighting coefficient k=2, the correlation coefficient becomes better than 0.97. In a range of 6 < k < 28, the correlation is better than 0.99, and for 12 < k < 15 it is nearly perfect at >0.998. It is immediately apparent that any temperature and/or load dependencies of the pressure drop in the exhaust system can be taken account of perfectly by choosing an appropriate value of the weighting coefficient k.

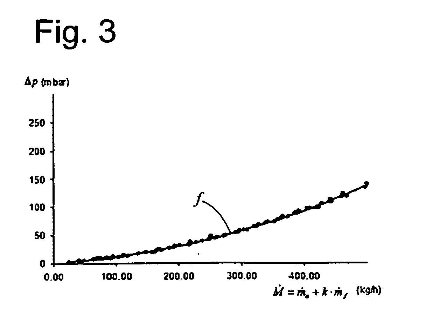

Fig. 3 illustrates the relation $\Delta p = f(\dot{M})$ between pressure drop $\Delta p$ and weighted mass flow $\dot{M}$ in a practical operating range of the engine. In this graph, dots represent measured values, and a curve f gives the estimated relationship between weighted mass flow $\dot{M}$ and pressure drop. The agreement between estimate and experimental data is practically perfect. The curve f of Fig. 3 is a second order polynomial which can be obtained e. g. by least-squares-fitting to the experimental data.

The optimum value of the weighting coefficient k may depend to a certain extent on the characteristics of the engine. However, the optimum weighting coefficient for a given engine may be obtained quite straightforwardly by obtaining experimental data of pressure drop $\Delta p$, fresh air flow rate $\dot{m}_a$ and fuel flow rate $\dot{m}_f$ and carrying out a least-squares fit for polynomial coefficients $a_2$, $a_1$ and weighting factor k in formula

$$\Delta p = a_2(\dot{m}_a + k\,\dot{m}_f)^2 + a_1(\dot{m}_a + k\,\dot{m}_f)$$

**List of reference signs**

engine block 1
exhaust manifold 2
particulate filter 3
exhaust duct 4
muffler 5
outlet section 6
oxygen sensor 7
pressure sensor 8
airflow sensor 9

**Claims**

1. A method for estimating a pressure drop ($\Delta p$) between two sections of an exhaust line of a Diesel engine, comprising the steps of

   - measuring a fresh air mass flow rate ($\dot{m}_a$) into the engine,
   - measuring a fuel mass flow rate ($\dot{m}_f$) into the engine,
   - calculating an exhaust gas mass flow rate ($\dot{M}$) from said fresh air and fuel mass flow rates ($\dot{m}_a$, $\dot{m}_f$),
   - determining an estimated pressure drop ($\Delta p$) as a function of said exhaust gas mass flow rate ($\dot{M}$), **characterized in that** the exhaust gas mass flow rate ($\dot{M}$) is calculated as a weighted sum of said fresh air and fuel mass flow rates ($\dot{m}_a$, $\dot{m}_f$) wherein a weighting factor (k) of the fuel mass flow rate ($\dot{m}_f$) is higher than a weighting factor of the fresh air mass flow rate ($\dot{m}_a$).

2. The method of claim 1, wherein the weighting factor (k) of the fuel mass flow rate ($\dot{m}_f$) is at least twice that of the fresh air mass flow rate ($\dot{m}_a$).

3. The method of claim 1, wherein the weighting factor of the fuel mass flow rate ($\dot{m}_f$) is between 5 and 30 times that of the fresh air mass flow rate ($\dot{m}_a$).

4. The method of any of the preceding claims, wherein the function (f) yielding the pressure drop ($\Delta p$) is a polynomial in the exhaust gas mass flow rate ($\dot{M}$).

5. The method of any of the preceding claims, wherein one of said sections comprises a pressure sensor (8) and the other section comprises a second sensor (7) which gives pressure-dependent readings, further comprising the steps of calculating a pressure in said other section based on a pressure reading from said pressure sensor (8) and said estimated pressure drop, and of compensating a reading from said second sensor (7) based on the calculated pressure.

6. The method of any of claims 1 to 4, wherein one of said sections is a downstream end (6) of the exhaust line.

## Patentansprüche

1. Verfahren zur Einschätzung eines Druckabfalls ($\Delta$p) zwischen zwei Abschnitten der Abgasleitung eines Dieselmotors, das folgende Schritte umfasst:

   - Messen einer Frischluftmassenströmungsrate ($\dot{m}_a$) in den Motor,
   - Messen einer Kraftstoffmassenströmungsrate ($\dot{m}_f$) in den Motor,
   - Berechnen einer Abgasmassenströmungsrate (M) aus den Frischluft- und Kraftstoffmassenströmungsraten ($\dot{m}_a$, $\dot{m}_f$),
   - Feststellen eines geschätzten Druckabfalls ($\Delta$p) als Funktion der Abgasmassenströmungsrate (M), **dadurch gekennzeichnet, dass** die Abgasmassenströmungsrate (M) als gewichtete Summe der Frischluft- und Kraftstoffmassenströmungsraten ($\dot{m}_a$, $\dot{m}_f$) berechnet wird, wobei ein Gewichtungsfaktor (k) der Kraftstoffmassenströmungsrate ($\dot{m}_f$) höher ist als ein Gewichtungsfaktor der Frischluftmassenströmungsrate ($\dot{m}_a$).

2. Verfahren gemäß Anspruch 1, wobei der Gewichtungsfaktor (k) der Kraftstoffmassenströmungsrate ($\dot{m}_f$) wenigstens zweimal so groß ist wie jener der Frischluftmassenströmungsrate ($\dot{m}_a$).

3. Verfahren gemäß Anspruch 1, wobei der Gewichtungsfaktor (k) der Kraftstoffmassenströmungsrate ($\dot{m}_f$) zwischen 5 und 30 Mal so groß ist wie jeder der Frischluftmassenströmungsrate ($\dot{m}_a$).

4. Verfahren gemäß einem der vorangehenden Ansprüche, wobei die Funktion (f), die den Druckabfall ($\Delta$p) ergibt, ein Polynom in der Abgasmassenströmungsrate (M) ist.

5. Verfahren gemäß einem der vorangehenden Ansprüche, wobei einer der Abschnitte einen Drucksensor (8) umfasst und der andere Abschnitt einen zweiten Sensor (7) umfasst, der druckabhängige Messwerte wiedergibt, ferner umfassend die Schritte der Berechnung eines Drucks in dem anderen Abschnitt auf Basis eines Druckmesswerts vom Drucksensor (8) und des geschätzten Druckabfalls, und der Kompensation eines Messwerts vom zweiten Sensor (7) auf Basis des berechneten Drucks.

6. Verfahren gemäß einem der Ansprüche 1 bis 4, wobei einer der Abschnitte ein stromabwärtiges Ende (6) der Abgasleitung ist.

## Revendications

1. Procédé pour estimer une baisse de pression ($\Delta$p) entre deux sections d'une conduite d'échappement d'un moteur diesel, comprenant les étapes de :

   - mesure d'un débit de masse d'air frais ($\dot{m}_a$) entrant dans le moteur,
   - mesure d'un débit de masse de carburant ($\dot{m}_f$) entrant dans le moteur,
   - calcul d'un débit de masse de gaz d'échappement (M) à partir desdits débits de masse d'air frais et de carburant ($\dot{m}_a$, $\dot{m}_f$),
   - détermination d'une baisse de pression estimée ($\Delta$p) en fonction dudit débit de masse de gaz d'échappement ($\dot{M}$),

   **caractérisé en ce que** le débit de masse de gaz d'échappement (M) est calculé comme la somme pondérée desdits débits de masse d'air frais et de carburant ($\dot{m}_a$, $\dot{m}_f$), un facteur de pondération (k) du débit de masse de carburant ($\dot{m}_f$) étant supérieur à un facteur de pondération du débit de masse d'air frais ($\dot{m}_a$).

2. Procédé selon la revendication 1, dans lequel le facteur de pondération (k) du débit de masse de carburant ($\dot{m}_f$) est au moins deux fois plus élevé que celui du débit de masse d'air frais ($\dot{m}_a$).

3. Procédé selon la revendication 1, dans lequel le facteur de pondération du débit de masse de carburant ($\dot{m}_f$) représente entre 5 et 30 fois celui du débit de masse d' air frais ($\dot{m}_a$).

4. Procédé selon l'une quelconque des revendications précédentes, dans lequel la fonction (f) donnant la baisse de pression ($\Delta$p) est une fonction polynomiale dans le débit de masse de gaz d'échappement ($\dot{M}$).

5. Procédé selon l'une quelconque des revendications précédentes, dans lequel l'une desdites sections comprend un capteur de pression (8) et l'autre section comprend un deuxième capteur (7) qui donne des mesures dépendantes de la pression, comprenant en outre les étapes de calcul d'une pression dans ladite autre section en fonction d'une mesure de pression dudit capteur de pression (8) et de ladite baisse de pression, et de compensation d'une mesure dudit deuxième capteur (7) en fonction de la pression calculée.

6. Procédé selon l'une quelconque des revendications 1 à 4, dans lequel l'une desdites sections est une extrémité d'aval (6) de la conduite d'échappement.

## Fig. 1

## Fig. 2

# Fig. 3

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

•   EP 1081347 B1